# EUROPEAN PATENT APPLICATION

(11) **EP 3 150 728 A1**
(43) Date of publication of application: **05.04.2017**
(21) Application number: 16189063.7
(22) Date of filing: 15.09.2016
(51) Int. Cl.: C14B 1/56, B05C 1/08, B31F 1/07, F16C 13/00

(54) **MACHINE FOR ROLLER FINISHING NATURAL HIDES AND LEATHER**

(30) Priority: 02.10.2015 IT UB20157466 U
(71) Applicant: GE.MA.TA. S.p.A., 36070 Trissino (VI) (IT)
(72) Inventor: MAITAN, GIANNI, 30122 VENEZIA (IT)
(74) Representative: Bettello, Pietro

(57) **Abstract**

The finding concerns a machine for roller finishing natural hides and leather, in which the hides (P) are transported by a lower roller (C) or by a belt (T), where an upper spreading roller, consisting of an engraved cylinder (100), pressing on the surface of the hide, counteracted by the underlying cylinder (C) or by the belt (T), takes care of depositing on the aforementioned surface a film of liquid product (L), previously distributed on the surface (S) of the aforementioned engraved cylinder (100), through a doctor blade (R). In such a machine the engraved cylinder (100) is made up of a spindle, on which a sleeve (2), with the engraved outer surface (3) is slotted and held, the mounting and dismounting operations of which on the spindle are greatly facilitated with respect to what is foreseen in similar known devices.

## Description

of the invention ENTITLED: "Machine for roller finishing natural hides and leather" on behalf of GE.MA.TA S.p.A..

The present finding concerns a machine for roller finishing natural hides and leather, according to the general part of claim 1.

As known, to carry out the finishing operations in the field of tanning, roller spreading machines are particularly used, commonly called "roller coaters", in which the hide is transported through a lower roller or by a belt and where an opposite upper spreading roller, consisting of an engraved steel cylinder or with surface made of elastic material, pressed on the surface of the hide, counteracted by the underlying cylinder or belt, takes care of depositing onto the aforementioned surface a film of liquid product, previously distributed on the surface of the aforementioned upper roller, through a doctor blade.

The perfect result of the finishing operation of hides depends, as well as on a regular and constant pulling of the product in the spreading area, i.e. comprised between the upper roller and the underlying lower roller or the transportation belt, particularly on the spreading or "coating" action, i.e. on the action of depositing the liquid product on the entire surface of the material to be treated.

Normally, the upper roller consists of a steel cylinder, called "engraved cylinder", which can rotate in "sync", i.e. the same way as the direction of forward movement of the hide, or in "reverse", i.e. the opposite way to the aforementioned direction, the outer surface of which - the so-called "engraved" surface, is patterned by means of the creation of pits, which hold the product before it is released onto the surface of the hide.

Alternatively, when the surface of the hide to be finished is not perfectly flat, having hollows and concavities that prevent uniform contact between the two opposite surfaces, the upper roller consists of a rigid cylindrical shaft covered, on its outer part, with a layer of plastic material having high deformability, the surface of which is engraved (see patent document no. VI2008A000187, to the same Applicant).

In practice, a drawback encountered during the use of the machine for roller finishing natural hides and leather consists of the fact that in order to carry out the cleaning operations of the patterned surface and/or when the parameters of the finish are changed it is always necessary to remove the upper roller from the machine, but such an operation is very complicated, due to the substantial bulk and the great weight of the aforementioned roller.

In order to eliminate such a drawback upper rollers are made consisting of two parts: a steel cylinder with bearing function called "spindle", on which a tubular element of low thickness called "sleeve" is slotted, which constitutes the engraved part and that is removable, so as to be able to use a plurality of sleeves on a single spindle.

In the current state of the art the sleeve, after it has been totally slotted into the spindle, is held in position through mechanical fasteners which do not always ensure secure locking of the sleeve on the spindle and moreover, due to the complexity of the operation of insertion and withdrawal of the sleeve, limit the operative advantages able to be obtained with the use of an engraved cylinder consisting of two parts.

The purpose of the present finding is to make an upper roller or engraved cylinder, of the type made up of a spindle and a removable sleeve with engraved surface, in which the operations of insertion and withdrawal of the sleeve do not have the drawbacks that are found in similar known products.

Specifically, the purpose of the finding is to make an engraved cylinder of the type made up of a spindle and a removable sleeve with engraved surface, in which the operations of insertion and withdrawal of the sleeve and the locking thereof on the spindle take place automatically and without the use of additional mechanical elements.

Such a purpose is obtained by foreseeing that during the operation of insertion and withdrawal of the sleeve on the spindle there is a pressurised air flow, which penetrates into the gap comprised between the outer surface of the spindle and the inner surface of the central annular duct of the sleeve, in such a way generating an annular film of pressurised air that consequently causes a micrometric radial dilation of the aforementioned annular duct and of the entire sleeve, for which reason facilitated sliding of the aforementioned sleeve is obtained during the insertion and withdrawal strokes of the sleeve itself on the spindle.

Basically, the annular film of pressurised air present in the gap is in the form of an "air cushion", on which the sleeve slides, until it is totally positioned on the spindle or until it is totally withdrawn from it.

Operatively, in the final insertion step of the sleeve on the spindle, when the sleeve is totally inserted in the spindle, the pressurised air flow is interrupted so that, without the pressurised air in the sleeve/spindle gap, through the effect of the elastic return of the sleeve, the diameter of the central annular duct of the aforementioned sleeve reduces, going back to the normal size, to lock, stably and through interference, on the body of the spindle, thus constituting the complete engraved cylinder.

Again operatively, before the start of the withdrawal step of the sleeve from the spindle, the pressurised air flow is activated, which generates the pressurised air film which, by micrometrically dilating the central hole and the entire sleeve, allows the facilitated withdrawal of the aforementioned sleeve from the spindle.

The finding will be described better in a particular embodiment thereof, given as a non-limiting example, with the help of the attached tables of drawings, where:

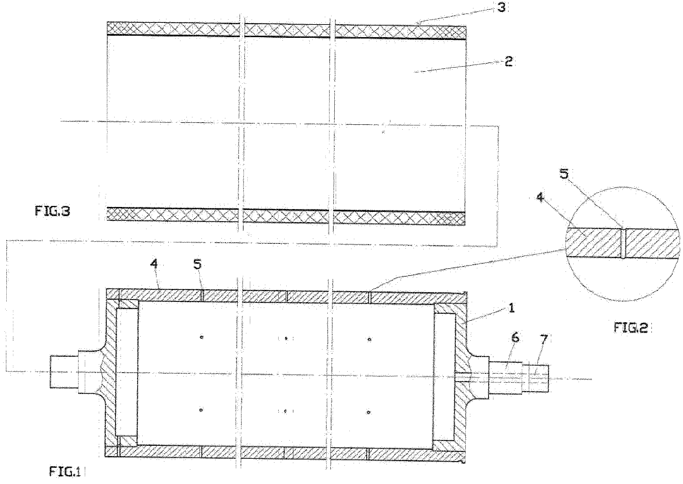

- figs. 1, 2 (Table I) represent two views, in section and in detail, of the spindle;
- fig. 3 represents a section view of the sleeve;
- figs. 4, 5 (Table II) represent two section and detailed views of the insertion/withdrawal step of the sleeve on the spindle;
- figs. 6, 7 (Table III) represent two views, in section and in detail, of the engraved cylinder according to the finding;
- fig. 8 represents a schematic view of the machine provided with the cylinder according to fig. 6.

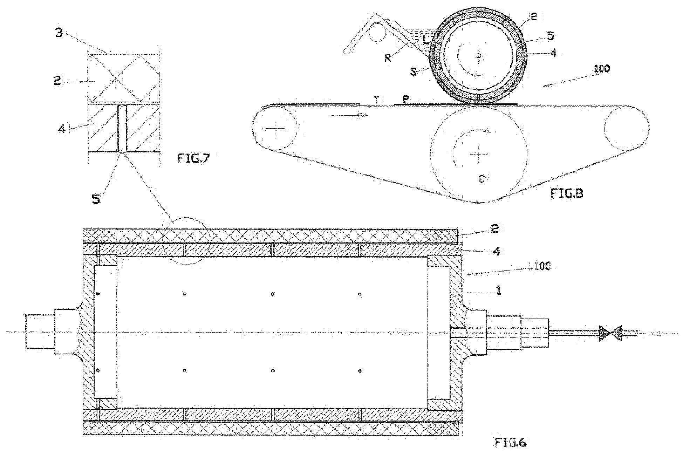

As can be seen in fig. 8, in the machine for finishing natural hides and leather according to the finding the hides "P" are transported by a lower roller "C" or by a belt "T"; an upper spreading roller, consisting of an engraved cylinder 100, pressing on the surface of the hide, counteracted by the underlying cylinder "C" or by the belt "T", takes care of depositing onto the aforementioned surface a film of liquid product "L", previously distributed on the surface "S" of the aforementioned upper engraved cylinder 100, through a doctor blade "R".

As can be worked out by observing the figures, the engraved cylinder 100 (fig. 6) is made up of a spindle 1, on which a sleeve 2 is slotted and held, with the engraved outer surface 3, the operations of mounting and dismounting on the spindle 1 are made possible by the presence of a pressurised air flow 9 in the gap 10 comprised between the outer surface of the spindle 1 and the inner surface of the sleeve 2, which causes a micrometric radial dilation of the entire sleeve 2, which allows the aforementioned sleeve 2 to slide during the insertion and withdrawal strokes on the spindle 1.

Constructively, the spindle 1 has a plurality of radial holes 5 on the drum 4 and at least one of the hubs 6 equipped with a hole 7, to allow the passage of the pressurised air flow 9.

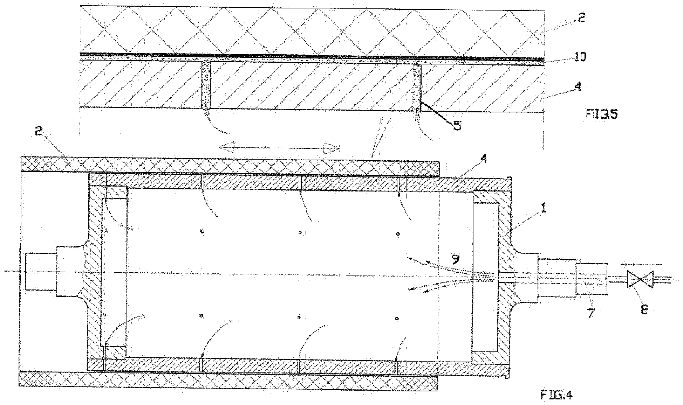

Operatively, as can be seen in figs.4 and 5, during the insertion and withdrawal step of the sleeve 2 on the spindle 1 a pressurised air flow 9 is sent, through an outer duct 8, said flow inserting, through the radial holes 5 in the gap 10, causing the micrometric dilation of the sleeve 2.

Thereafter, as can be seen in figs. 6 and 7, when the sleeve 2 is completely positioned on the spindle 1, the pressurised air flow 9 is introduced, so that the sleeve 2, through the effect of the elastic return, narrows, going back into contact and locking on the drum 4, to form the engraved cylinder 100, ready for use.

From what has been outlined above it can be seen that the purpose of the finding has been fully accomplished, since the removal/positioning of the sleeve 2 on the spindle 1, with the use of the pressurised air flow, takes place quickly and simply.

The finding extends to the use of sleeves with different configuration, such as those consisting of a steel shaft with engraved surface, or those consisting of a rigid cylindrical shaft covered, on the outer part thereof, with a layer of elastic material, or furthermore those consisting of a cylindrical shaft of plastic material covered, on the outer surface thereof, with a layer of elastic material.

Moreover the sizes and the constructive details of the device according to the finding can vary, provided that it is all covered by the inventive concept defined by the following claims.

## Claims

1. MACHINE FOR ROLLER FINISHING NATURAL HIDES AND LEATHER, in which the hides (P) are transported by a lower roller (C) or by a belt (T), where an upper spreading roller, consisting of an engraved cylinder (100), pressing on the surface of the hide, counteracted by the underlying cylinder (C) or by the belt (T), takes care of depositing on the aforementioned surface a film of liquid product (L), previously distributed on the surface (S) of the aforementioned upper engraved cylinder (100), through a doctor blade (R), said machine being **characterised in that** said engraved cylinder (100) is made up of a spindle (1), on which a sleeve (2), with the engraved outer surface (3) is slotted and held, the mounting and dismounting operations of which on the spindle (1) are made possible by the presence of a pressurised air flow (9) in the gap (10) comprised between the outer surface of the spindle (1) and the inner surface of the sleeve (2), which causes a micrometric radial dilation of the entire sleeve (2), which allows the aforementioned sleeve (2) to slide during the insertion and withdrawal strokes on the spindle (1).

2. MACHINE FOR ROLLER FINISHING NATURAL HIDES AND LEATHER, according to claim 1, **characterised in that** the spindle (1) has a plurality of radial holes (5) on the drum (4), at least one of its hubs (6) being equipped with a hole (7), to allow the passage of the pressurised air flow (9).

3. MACHINE FOR ROLLER FINISHING NATURAL HIDES AND LEATHER, according to the previous claims, **characterised in that**, during the insertion/withdrawal steps of the sleeve (2), a pressurised air flow (9) is sent onto the spindle (1), through an outer duct (8), said flow, through the radial holes (5) inserting into the gap (10), causing a micrometric dilation of the sleeve (2).

4. MACHINE FOR ROLLER FINISHING NATURAL HIDES AND LEATHER, according to the previous claims, **characterised in that** when the sleeve (2) is completely positioned on the spindle (1), the pressurised air flow (9) is interrupted, so that the sleeve (2), through the effect of its elastic return, narrows, going back into contact with and locking on the drum (4) of the spindle, to form the engraved cylinder (100).

5. MACHINE FOR ROLLER FINISHING NATURAL HIDES AND LEATHER, according to the previous claims, **characterised in that** the sleeve (2) consists of a steel shaft with engraved surface.

6. MACHINE FOR ROLLER FINISHING NATURAL HIDES AND LEATHER, according to the previous claims, **characterised in that** the sleeve (2) consists of a rigid cylindrical shaft covered, on its end part, by a layer of elastic material.

7. MACHINE FOR ROLLER FINISHING NATURAL HIDES AND LEATHER, according to the previous claims, **characterised in that** the sleeve (2) consists of a cylindrical shaft of plastic material covered, on its outer part, by a layer of elastic material.
